# EUROPÄISCHE PATENTSCHRIFT

(11) **EP 2 887 164 B1**
(45) Veröffentlichungstag und Bekanntmachung des Hinweises auf die Patenterteilung: **08.06.2016**
(21) Anmeldenummer: 14193078.4
(22) Anmeldetag: 13.11.2014
(51) Int. Cl.: G05B 19/042

(54) **Verfahren zum Programmieren einer Sicherheitssteuerung**
Method for programming a safety control device
Procédé destiné à la programmation d'une commande de sécurité

(30) Priorität: 09.12.2013 DE 102013113720
(43) Veröffentlichungstag der Anmeldung: 24.06.2015
(73) Patentinhaber: Wieland Electric GmbH, 96052 Bamberg (DE)
(72) Erfinder: Bilz, Falko, 14612 Falkensee (DE); Lindner, Andreas, 14656 Brieselang (DE)
(74) Vertreter: Harbach, Ulrich

(56) Entgegenhaltungen:
- CH-A1- 702 057
- DE-A1-102010 026 392

## Beschreibung

Die Erfindung betrifft ein Verfahren zum Programmieren einer Sicherheitssteuerung, ausgelegt zum gemäß einer Sicherheitsvorschrift sicheren Ein- und Ausschalten eines elektrischen Verbrauchers, wobei Schalteingänge und/oder Schaltausgänge der Sicherheitssteuerung logisch verknüpft werden, wobei die logische Verknüpfung einen Funktionsbaustein mit einer Anzahl von Ausgängen umfasst, wobei durch den Funktionsbaustein ein Ausgangswert für den jeweiligen Ausgang anhand zumindest eines Parameterwerts gebildet wird, wobei in dem Funktionsbaustein eine Mehrzahl von Auswahlparameterwerten hinterlegt wird.

Sicherheitssteuerungen werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den elektrischen Verbraucher über Schaltausgänge der Sicherheitssteuerung gesteuert, die zur Erfüllung der einschlägigen Sicherheitsvorschriften und -zertifizierungen ausgelegt sind. Dazu sind die internen Schaltkreise typischerweise redundant ausgestaltet, z.B. solche zum Ein- und Ausschalten des elektrischen Verbrauchers über zwei in Reihe geschaltete Relais, die von getrennten Stromkreisen gesteuert werden.

Sicherheitssteuerungen weisen üblicherweise eine Anzahl von Schalteingängen und -ausgängen zum Anschluss der Arbeitskontakte eines Sicherheitsschaltelements auf. Das Sicherheitsschaltelement kann z.B. ein Not-Aus-Schalter sein, eine Positions- oder Stellungsüberwachung z.B. einer Schutztür, eine Lichtschranke, eine Schaltmatte etc. Das Sicherheitsschaltelement hat dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn das Sicherheitsschaltelement nicht mehr in der Position "sicher" ist.

Sicherheitssteuerungen sind häufig auch modular aufgebaut, so dass mehrere, unterschiedlich geartete Sicherheitsschaltelemente angeschlossen werden können. Weiterhin können so auch mehrere elektrische Verbraucher gezielt angesteuert werden. Bei derartigen größeren Sicherheitssteuerungen, seien sie nun modular oder nicht-modular aufgebaut, ist eine Programmierung allein anhand von manuellen Einstellschaltern nicht mehr praktikabel. Daher wird hier häufig auf eine Programmierung auf einem digitalen Computer zurückgegriffen, wie sie beispielsweise auch aus dem Bereich der Speicherprogrammierbaren Steuerungen (SPS) bekannt ist. Dies ist beispielsweise aus der WO 2007/076285 A2 bekannt.

Die Programmieroberfläche stellt dabei auch Funktionsbausteine zur Verfügung, so z.B. einfache logische Bausteine wie "UND" oder "ODER", die aus zwei oder mehr binären Eingangswerten einen einzelnen Ausgangswert erzeugen, oder aber Funktionsbausteine mit hinterlegten Parameterwerten, die ein Eingangssignal anhand des jeweiligen Parameterwerts modifizieren oder auch ein vorbestimmtes Ausgangssignal anhand des Parameterwerts erzeugen.

Da hierdurch eine in gewissen Grenzen freie Programmierung der Sicherheitssteuerung möglich ist und nicht jede mögliche auf diesem Weg entstandene Programmierung auf Einhaltung der genannten Sicherheitsnormen- und zertifizierungen geprüft werden kann, werden stattdessen die einzelnen in der graphischen Programmieroberfläche zur Verfügung gestellten Funktionsbausteine mit ihrem jeweiligen Softwarecode von der Zertifizierungsstelle geprüft und zertifiziert. Für jeden neuen Funktionsbaustein ist daher eine Sicherheitszertifizierung erforderlich, weswegen im Gegensatz zu Programmiersoftware für SPSen dem Benutzer keine Möglichkeit gegeben wird, eigene Funktionsbausteine zu definieren. Zwar beschreibt die genannte WO 2007/076285 A1 auch sogenannte "SIS-FFBs", d.h. sichere flexible benutzerdefinierbare Funktionsblöcke, allerdings werden keinerlei Lösungen offenbart, wie ein solcher SIS-FFB realisiert werden soll, da das genannte Problem der praktischen Nicht-Zertifizierbarkeit eines derartig flexibel konfigurierbaren Funktionsblocks nicht erkannt wird. Damit bleibt in der Praxis die Anzahl der verfügbaren Funktionsbausteine bei Sicherheitssteuerungen vergleichsweise gering und deren Struktur eher einfach.

Bei komplexeren Programmierungen führt dies jedoch häufig zu vergleichsweise großen und unübersichtlichen Funktionsplänen, da komplexere logische Verknüpfungen bei nur grundlegenden Funktionsbausteinen eine Vielzahl von Funktionsbausteinen und komplizierte logische Verknüpfungen erfordern. Damit wird die Wahrscheinlichkeit von Fehlern bei der Programmierung größer, was ein Sicherheitsrisiko darstellt. Auch erhöhen derartige komplexe Funktionspläne die erforderliche Rechenzeit und Prozessorleistung. Weiterhin können Funktionsbausteine, auch wenn deren Ergebnisse einer weiteren Auswertung nicht zugeführt werden, Systemfehler hervorrufen, z.B. wenn die Eingangswerte ausserhalb ihrer Spezifikation liegen.

Es ist daher Aufgabe der Erfindung, ein Verfahren zur Programmierung einer Sicherheitssteuerung anzugeben, durch welches vergleichsweise komplexe logische Verknüpfungen bei einer geringen Wahrscheinlichkeit von Fehlern bei der Programmierung erstellt werden können, die einen möglichst geringem Rechenaufwand erfordern.

Diese Aufgabe wird erfindungsgemäß dadurch gelöst, dass der Funktionsbaustein einen Parameterauswahleingang aufweist und der Parameterwert anhand des Eingangswerts am Parameterauswahleingang aus den Auswahlparameterwerten ausgewählt wird.

Die Erfindung geht dabei von der Überlegung aus, dass komplexe logische Verknüpfungen in bestehenden Systemen insbesondere dann entstehen, wenn gleiche oder ähnliche Funktionsabläufe bedarfsweise mit unterschiedlichen Parametern realisiert werden müssen. Dies erfordert derzeit mehrere Funktionsbausteine, die mit den jeweils unterschiedlichen Parametern vorkonfiguriert werden, und zumindest einen Funktionsbaustein zur Aktivierung der benötigten bzw. Deaktivierung der nicht benötigten Funktionsbausteine. Es sollte daher eine Möglichkeit geschaffen werden, derartige Kombinationen in einer geringeren Anzahl von Funktionsbausteinen zusammenzufassen. Hierbei ist jedoch zu beachten, dass jeder Funktionsbaustein für ein Programmiersystem einer Sicherheitssteuerung einzeln zu zertifizieren ist. Es sollte daher ein Funktionsbaustein gefunden werden, der komplex genug ist, die genannte komplexe Programmierung mit mehreren Parametern zu vereinfachen, und der andererseits einfach und damit universell genug ist, um in möglichst vielen solcher Programmierungen einsetzbar zu sein. Dies ist erreichbar, indem die in dem Funktionsbaustein hinterlegte Mehrzahl von Auswahlparameterwerten anhand eines zusätzlichen Parameterauswahleinganges selektiert wird.

In vorteilhafter Ausgestaltung ist der Parameterwert Teil eines Parametersatzes, wobei in dem Funktionsbaustein eine Mehrzahl von Auswahlparametersätzen hinterlegt wird, der Funktionsbaustein einen Parameterauswahleingang aufweist und der Parametersatz anhand des Eingangswerts am Parameterauswahleingang aus den Auswahlparametersätzen ausgewählt wird. Mit anderen Worten: Das Programmiersystem stellt einen Funktionsbaustein zur Verfügung, in dem nicht nur mehrere Parameterwerte für einen einzelnen Parameter angegeben werden können, sondern mehrere ganze Sätze von Parameterwerten für mehrere Parameter. Über den Parameterauswahleingang wird somit nicht nur ein Parameterwert selektiert, sondern es wird ein ganzer Parameterwertsatz ausgewählt, der für jeden Parameter den jeweils im ausgewählten Satz angegebenen Parameterwert einstellt. Ein derartiger Funktionsbaustein ist einfach zu realisieren und vereinfacht die Programmierung komplexer logischer Verbindungen weiter.

Häufig werden auf den Verbindungen zwischen den Funktionsbausteinen binäre logische Werte, d.h. z.B. high oder low weitergeleitet. Diese können im realen Schaltkreis dann bestimmten Spannungswerten, z.B. 0 V und 5 V zugeordnet sein. Dies muss jedoch nicht immer der Fall sein: Vorteilhafterweise wird der Parameterwert anhand von mehr als zwei unterschiedlichen Eingangswerten am Parameterauswahleingang ausgewählt. Hierfür können mehr als zwei diskrete Zustände definiert sein, z.B. An, Aus, Halb. Diese können real den Spannungswerten 0 V, 5 V, 2,5 V zugeordnet sein. Es ist sogar denkbar, auch analoge Werte zu verarbeiten. Im Funktionsbaustein sind mehr als zwei Parameterwerte oder Sätze von Parameterwerten konfiguriert, die je nach Wert am Parameterauswahleingang selektiert werden.

Es sind jedoch auch Fälle denkbar, in denen mehr als zwei Parameterwerte oder Sätze von Parameterwerten konfiguriert werden sollen, jedoch nur binäre Eingangswerte zur Verfügung stehen. Insbesondere in diesem Fall weist der Funktionsbaustein vorteilhafterweise mehrere Parameterauswahleingänge auf und der Parameterwert bzw. der Satz von Parameterwerten wird anhand der Eingangswerte der mehreren Parameterauswahleingänge aus den Auswahlparameterwerten ausgewählt. Hierbei ist dann die logische Kombination der Eingangswerte entscheidend. Bei zwei binären Parameterauswahleingängen sind z.B. schon vier verschiedene Parameterwerte oder Sätze auswählbar, nämlich für die Eingangswerte high-high, high-low, low-high und low-low.

Im Funktionsbaustein können verschiedenste Werte als Parameterwert hinterlegt werden. Vorteilhafterweise ist der Parameterwert ein Zeitwert. Dieser kann z.B. als Zeitkonstante für bestimmte Funktionen dienen.

In weiterer vorteilhafter Ausgestaltung ist der Parameterwert ein Spannungswert. Dieser kann beispielsweise als Ausgangswert an einem Ausgang des Funktionsbausteins dienen.

In vorteilhafter Ausgestaltung des Verfahrens erfolgt das Programmieren mittels einer graphischen Benutzeroberfläche, auf der den Schalteingängen und/oder Schaltausgängen eine graphische Repräsentation zugeordnet wird und die Schalteingänge und/oder Schaltausgänge durch Verbindung ihrer jeweiligen graphischen Repräsentation auf der graphischen Benutzeroberfläche logisch verknüpft werden. Hierdurch ergibt sich eine für den Benutzer besonders komfortable und einfache Möglichkeit der Programmierung der Sicherheitssteuerung.

Ein Computerprogrammprodukt, welches direkt in den internen Speicher eines digitalen Computers mit einem Bildschirm geladen werden kann, umfasst vorteilhafterweise Softwarecodeabschnitte, die, wenn sie auf dem Computer ausgeführt werden, den Computer zum Ausführen des Verfahrens nach einem der vorhergehenden Ansprüche ertüchtigen, wobei die graphische Benutzeroberfläche auf dem Bildschirm des Computers angezeigt wird. Ein derartiges Computerprogrammprodukt ist eine Programmiersoftware, die mittels der Hardware des Computers wie Bildschirm und Schnittstellen die Erstellung einer Programmierung mittels der beschriebenen graphischen Repräsentation von Schaltein- und ausgängen der Sicherheitssteuerung ermöglicht und entsprechende Werkzeuge zur Erstellung logischer Verknüpfungen mit beschriebenen Funktionsbausteinen zur Verfügung stellt.

Vorteilhafterweise ist ein derartiges Computerprogrammprodukt in den internen Speicher eines digitalen Computers geladen. Ein derartiger Computer kann ein üblicher Personal Computer sein, bei einer entsprechenden Schnittstelle ist es aber auch denkbar, eine derartige Software auch für Tablets oder sogar Smartphones anzupassen. Auch sonstige proprietäre Systeme können mit einer entsprechenden Software ausgestattet sein. Alle diese Systeme sind unter dem Begriff digitaler Computer zusammengefasst.

Ein Computerprogrammprodukt, welches direkt in den internen Speicher einer Sicherheitssteuerung geladen werden kann, umfasst vorteilhafterweise Softwarecodeabschnitte, die mittels des beschriebenen Verfahrens erstellt wurden. Hierbei wird die mittels der Software für den digitalen Computer erstellte Programmierung in den Speicher der Sicherheitssteuerung geladen, so dass diese unabhängig und autark lauffähig ist.

Eine Sicherheitssteuerung, ausgelegt zum gemäß einer Sicherheitsvorschrift sicheren Ein- und Ausschalten eines elektrischen Verbrauchers, ist vorteilhafterweise mit dem beschriebenen Verfahren programmiert.

Die mit der Erfindung verbundenen Vorteile bestehen insbesondere darin, dass durch die Bereitstellung eines Funktionsbausteins mit einer Möglichkeit zur Konfigurierung mehrerer Auswahlparameterwerte oder -wertsätze und mit einem oder mehreren Parameterauswahleingängen ermöglicht wird, auch komplizierte logische Strukturen einfach abzubilden und damit auf sichere und komfortable Weise eine Programmierung für eine Sicherheitssteuerung zu erstellen. Die Parameterwerte können dabei bedarfsweise, auch während der Laufzeit ausgewählt werden. Durch die geringere notwendige Anzahl von Funktionsbausteinen wird aber nicht nur das Sicherheitsniveau durch die reduzierte Bedienungsfehleranfälligkeit erhöht, sondern die benötigte Rechenzeit und Prozessorleistung währen der Laufzeit in der Sicherheitssteuerung wird reduziert.

Die Erfindung wird anhand einer Zeichnung näher erläutert. Darin zeigen:
FIG 1 eine schematische Darstellung einer Sicherheitssteuerung,
FIG 2 eine schematische Darstellung der Sicherheitssteuerung in einer Betriebsart mit einem redundanten Schalter,
FIG 3 eine schematische Darstellung der Sicherheitssteuerung mit einem zur Programmierung ausgerüsteten digitalen Computer,
FIG 4 einen Teil einer logischen Verbindung in einer graphischen Repräsentation auf einer graphischen Benutzeroberfläche,
FIG 5 einen Funktionsbaustein mit mehreren konfigurierbaren und auswählbaren Parameterwerten in einer graphischen Repräsentation auf einer graphischen Benutzeroberfläche, und
FIG 6 einen Funktionsbaustein mit mehreren konfigurierbaren und auswählbaren Parameterwerten und mehreren Parameterauswahleingängen in einer graphischen Repräsentation auf einer graphischen Benutzeroberfläche.

Gleiche Teile sind in allen Figuren mit denselben Bezugszeichen versehen.

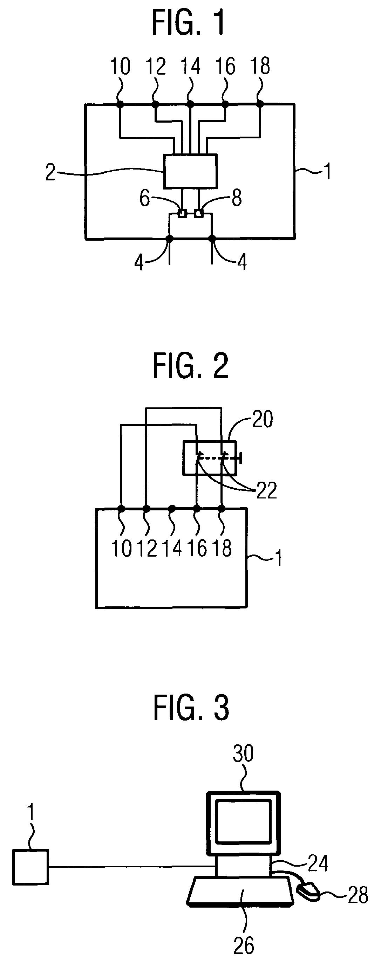

Die FIG 1 zeigt eine Sicherheitssteuerung 1 mit einer zentralen Steuereinheit 2. Die Steuereinheit 2 ist im Ausführungsbeispiel als Mikrocontroller ausgestaltet. Die Sicherheitssteuerung 1 hat zwei Schaltausgänge 4, die in die Stromzufuhr zu einem nicht näher gezeigten elektrischen Verbraucher eingeschaltet sind, der Gefahrenpotential aufweist und daher sicher ausgeschaltet werden soll. Dazu sind in die Verbindung zwischen den Schaltausgängen 4 zwei Relais 6, 8 in Reihe geschaltet. Um den Stromfluss zu erhalten, müssen beide Relais 6, 8 im geschlossenen Zustand sein, sie sind also redundant. Die Relais 6, 8 werden von der Steuereinheit 2 gesteuert.

Um die Funktion des elektrischen Verbrauchers im Gefahrenfall zu unterbrechen oder zumindest zu beeinflussen, sind verschiedene, beispielhaft in der folgenden FIG 2, jedoch nicht in der FIG 1 gezeigte Sicherheitsschaltelemente an die Sicherheitssteuerung 1 anschließbar. Diese können z.B. Not-Aus-Schalter, Lichtschranken, Türpositionsschalter etc. sein. Zum Anschluss dieser Sicherheitsschaltelemente weist das Sicherheitssteuerung zwei weitere Schaltausgänge 10, 12 und drei Schalteingänge 14, 16, 18 auf. An den Schaltausgängen 10, 12 liegt im Ausführungsbeispiel stets eine kleine positive Gleichspannung an, dies ist jedoch nicht zwingend, z.B. bei Open-Collector oder Tri State-Ausgängen.

Alternativ können an den Schaltausgängen 10, 12 auch Prüfsignale mit zyklischen, pulsartigen Prüfpulsen zur Leitungs- und Kurzschlussprüfung vorgesehen sein, die jeweils für eine kurze Dauer 0 Volt über der sonst erhaltenen Grundspannung einstellen. Die Prüfpulse können alternativ auch auf einen Trigger wie z.B. eine manuelle oder automatische veranlasste Prüfanfrage hin abgegeben werden.

FIG 2 zeigt ein Anwendungsbeispiel der Sicherheitssteuerung 1 im Gutzustand. Dabei wird aus Gründen der Übersichtlichkeit auf die Darstellung sämtlicher Teile der Sicherheitssteuerung 1 außer der Schaltein- und -ausgänge 10, 12, 14, 16, 18 verzichtet.

FIG 2 zeigt einen Not-Aus-Schalter 20, der zwei redundante Kanäle mit zwei mechanisch verbundenen Schaltern 22 umfasst. Die Schalter 22 sind äquivalent, d.h. beide im Gutzustand geschlossen und im Zustand der Anforderung der Sicherheitsfunktion geöffnet. Hier ist der Not-Aus-Schalter 20 derart mit dem Sicherheitssteuerung 1 verbunden, dass Schaltausgang 10 über den einen der Schalter 22 mit Schalteingang 16 verbunden ist, Schaltausgang 12 über den anderen der Schalter 22 mit Schalteingang 18. Schalteingang 14 bleibt unbelegt. Auf den Eingangsklemmen 14, 16, 18 ergibt sich bei Freigabe somit die Signalkombination Null, Plus, Plus, im Zustand der Anforderung der Sicherheitsfunktion die Signalkombination Null, Null, Null. Andere Signalkombinationen deuten auf einen Fehler hin.

Das Beispiel in den FIG 1 und 2 dient nur der Veranschaulichung der Funktionsweise der Sicherheitssteuerung 1 und ist daher stark vereinfacht. In der Realität wird das System weit komplexer sein, die Sicherheitssteuerung 1 kann modular aufgebaut sein, und es werden eine Vielzahl von Schaltein- und ausgängen vorhanden sein, die eine Vielzahl von elektrischen Verbrauchern schalten können und an die eine Vielzahl von Sicherheitsschaltelementen verschiedenster Art angeschlossen werden kann.

Die Anschlussanordnung und damit letztlich die an den Schaltein- und Ausgängen zu erwartenden Signalkombinationen müssen der Steuereinheit 2 bekannt sein, so dass sie für die jeweilige Kombination die richtige Schaltstellung für die elektrischen Verbraucher veranlasst. Dies geschieht über eine entsprechend in der Steuereinheit 2 hinterlegte Programmierung.

Die Programmierung wird an einem digitalen Computer 24 erstellt, der in FIG 3 gezeigt ist. Der Computer 24 weist Eingabegeräte wie eine Tastatur 26 und eine Maus 28 auf sowie einen Bildschirm 30 als Ausgabegerät. Über eine serielle oder parallele Schnittstelle oder z.B. über Ethernet ist er mit der Sicherheitssteuerung 1 verbunden. Auf dem Computer 24 wird durch einen Benutzer anhand der angedachten Anschlussanordnung die Programmierung erstellt, geprüft und anschließend in die Steuereinheit 2 der Sicherheitssteuerung 1 übertragen.

Die Programmierung erfolgt anhand graphischer Symbole, die logisch verknüpft werden. In einer graphischen Benutzeroberfläche sind die Schaltein- und ausgänge der Sicherheitssteuerung 1 graphisch repräsentiert. Zusätzlich werden dem Benutzer Funktionsbausteine mit vordefinierten Funktionen bereitgestellt, die in die logische Verknüpfung eingeschaltet werden können. Durch einfaches Verbinden mit Linien können die Signale wie gewünscht weitergeleitet werden. Durch geschickte Kombination von Funktionsbausteinen und entsprechende Verbindung mit den graphischen Repräsentationen der Schaltein- und -ausgänge wird die Schaltlogik definiert. Die Programmiersoftware erstellt aus der graphischen Darstellung automatisch die Konfigurationsdaten darstellenden Softwarecode, der dann in die Sicherheitssteuerung 1 übertragen werden kann und von dieser ausgeführt bzw. interpretiert werden kann.

Die von der Programmiersoftware zur Verfügung gestellten Funktionsbausteine und der mit ihnen verknüpfte Softwarecode für die Sicherheitssteuerung 1 unterliegt der Prüfung durch Sicherheitszertifizierungsstellen wie z.B. dem TÜV. Jeder Funktionsbaustein wird auf Einhaltung der entsprechenden Sicherheitsnormen geprüft und zertifiziert. Daher ist die Anzahl der Funktionsbausteine begrenzt und der Benutzer kann keine eigenen Funktionsbausteine entwerfen.

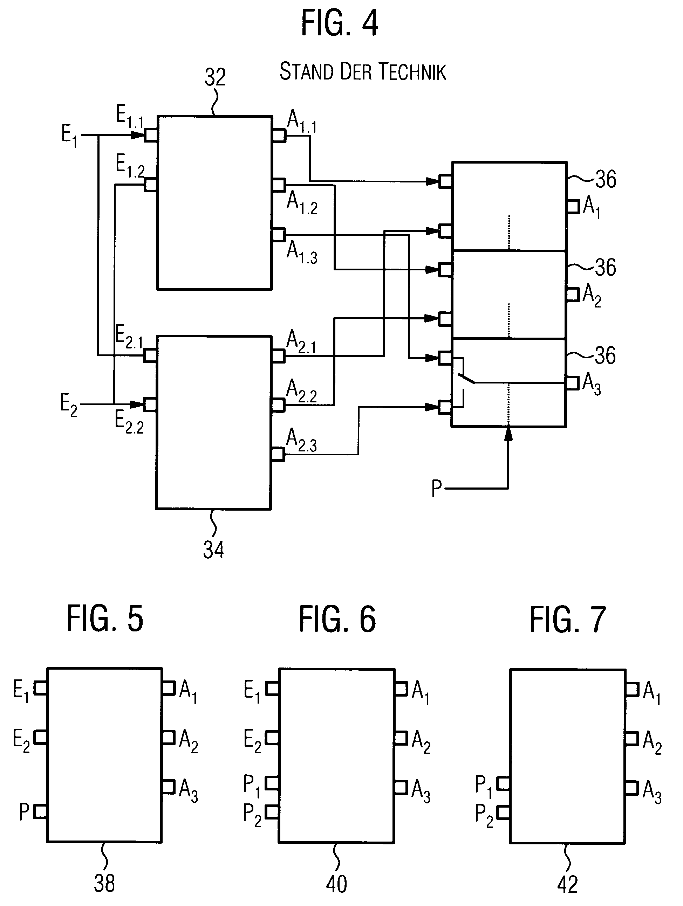

In der Programmiersoftware existieren jedoch Funktionsbausteine, die mit Parameterwerten konfiguriert werden können, beispielsweise mit Zeitkonstanten, Spannungs- oder Strompegeln. Häufig ist es jedoch erforderlich, unterschiedliche Parameterwerte zu verwenden, abhängig von einer bestimmten Situation während der Laufzeit. Ein Beispiel einer solchen Schaltung, wie sie in der graphischen Repräsentation auf dem Bildschirm 30 dargestellt wird, ist in FIG 4 gezeigt.

FIG 4 zeigt beispielhaft einen Funktionsbaustein 32 mit zwei Eingängen E1.1 und E1.2 sowie drei Ausgängen A1.1, A1.2, A1.3, in dem ein Parameterwert hinterlegt ist. Beliebig viele Eingänge E und Ausgänge A sind denkbar, der Funktionsbaustein 32 könnte auch überhaupt keine Eingänge E aufweisen und basierend auf dem Parameterwert nur ein eigenes Ausgangssignal A erzeugen.

FIG 4 zeigt eine Schaltung nach dem Stand der Technik, die dazu dient, abhängig von einem Parametersignal den Funktionsbaustein 32 mit entweder dem einen oder dem anderen Parameterwert zu nutzen. Hierfür ist zunächst ein fast identischer zweiter Funktionsbaustein 34 mit zwei Eingängen E2.1 und E2.2 sowie drei Ausgängen A2.1, A2.2, A2.3, in dem jedoch der zweite, unterschiedliche Parameterwert hinterlegt ist. An den Eingängen E1.1 und E2.1 sowie E2.1 und E2.2 liegt jeweils dasselbe Signal an.

Die Ausgänge A1.1 und A2.1, A1.2 und A2.2 sowie A1.3 und A2.3 sind jeweils in einen Multiplexer 36 geführt. Die Multiplexer 36 besitzen jeweils zwei Eingänge und einen Ausgang. Eines der Signale wir abhängig von dem Signal an einem Auswahleingang an den Ausgang weitergeleitet. Die Multiplexer 36 sind hinsichtlich ihrer Auswahleingänge parallel geschaltet. Der gemeinsame Eingang wird somit zum Parameterauswahleingang P.

Die Schaltung in FIG 4 benötigt fünf Funktionsbausteine und ist komplex und somit fehleranfällig hinsichtlich der Programmierung durch den Benutzer. Dies stellt ein Sicherheitsrisiko dar. Die Situation verkompliziert sich bei einer größeren Anzahl von Auswahlmöglichkeiten: Für jeden zusätzlichen Parameter oder Parameterwert sind zusätzliche Funktionsbausteine erforderlich.

Dieses Problem wird durch den in FIG 5 gezeigten Funktionsbaustein 38 gelöst. Er ersetzt die gesamte in FIG 4 gezeigte Schaltung und bietet weitere Möglichkeiten: Neben den Eingängen E1, E2 und den Ausgängen A1, A2, A3 (wiederum sind beliebige Anzahlen möglich) weist er einen Parameterauswahleingang P auf. In dem Funktionsbaustein 38 können mehrere Parameterwerte hinterlegt werden, die einem Schaltzustand am Parameterauswahleingang P zugeordnet werden. Beispielsweise könnte bei einem binären Signal am Parameterauswahleingang P dem Zustand low ein Zeitwert von T1 Sekunden, beim Zustand high ein Zeitwert von T2 Sekunden konfiguriert werden. Dem Benutzer werden entsprechende Einstellmöglichkeiten von der Programmiersoftware bereit gestellt.

Anhand des jeweils zur Laufzeit anliegenden Werts am Parameterauswahleingang P verwendet der Funktionsbaustein 38 entweder den einen oder anderen Parameterwert bei der Signalauswertung von den Eingängen E1, E2 zu den Ausgängen A1, A2, A3. Der Funktionsbaustein 38 ist dabei nicht auf binäre Eingangswerte beschränkt, es können auch noch mehr diskrete Eingangswerte für den Parameterauswahleingang P definiert werden, denen jeweils ein Parameterwert zugeordnet wird.

Auch ist die Auswahl nicht auf einen einzelnen Parameterwert beschränkt. Es können auch Sätze von mehreren Parameterwerten konfiguriert werden, von denen jeweils ein Satz ausgewählt wird. Beispielsweise könnte ein Satz von Parameterwerten unterschiedlicher physikalischer Größe vorgegeben werden, so z.B. eine Zeitkonstante von T1 Sekunden und ein Spannungspegel von U1 Volt für einen ersten Wert am Parameterauswahleingang P und eine Zeitkonstante von T2 Sekunden und ein Spannungspegel von U2 Volt für einen zweiten Wert am Parameterauswahleingang P usw.

Eine weitere Ausführungsform ist in FIG 6 gezeigt. Der dort gezeigte Funktionsbaustein 40 weist im Unterschied zum Funktionsbaustein 38 aus der FIG 5 zwei Parameterauswahleingänge P1, P2 auf. Abhängig von der Kombination der Signale an den Parameterauswahleingängen P1, P2 wird ein Parameterwert oder Satz ausgewählt, beispielhaft für binäre Eingangswerte und einen einzelnen Parameterwert anhand folgender Tabelle:

| P1 | P2 | Parameterwert |
|---|---|---|
| low | low | 1 |
| low | high | 2 |
| high | low | 5 |
| high | high | 2 |

Wie bereits erwähnt, kann hier auch ein gesamter Satz aus mehreren Parameterwerten bei einer bestimmten Kombination ausgewählt werden.

Ein weiteres Ausführungsbeispiel zeigt FIG 7. Der hier gezeigte Funktionsbaustein 42 weist überhaupt keine Eingänge auf, sondern lediglich drei Ausgänge A1, A2, A3 und zwei Parameterauswahleingänge P1, P2. Die Parameterauswahleigänge P1, P2 dienen im Ausführungsbeispiel nach der FIG 7 lediglich dazu, vorkonfigrierte Parameterwerte oder -sätze und/oder Teilfunktionen auszuwählen, ohne dabei zusätzlich externe Eingangswerte zu verarbeiten. Die Ausgangssignale an den Ausgängen A1, A2, A3 hängen also nur von der Parametrierung, d.h. von den Eingangssignalen an den Parameterauswahleingängen P1, P2 ab.

In weiteren nicht näher gezeigten Ausführungsbeispielen kann der Parameterwert selbst auch zur Laufzeit variabel sein, d.h. es handelt sich nicht notwendigerweise um feste Werte, sondern auch variable Werte, die selbst z.B. Berechnungsergebnis von anderen Funktionsbausteinen, Computerprogrammteilen und/oder extern zugeführten Werten sind). Dies bietet den Vorteil, dass der Funktionsbausteinen eine gewisse "Eigenintelligenz" aufweist. Hierdurch kann beispielsweise ein variabler Parameter abhängig von der Umgebungstemperatur der Steuerung ausgewählt werden.

Weitere Kombinationen der oben genannten Möglichkeiten sind hierbei denkbar. In der Summe wird die Programmierung erheblich vereinfacht, so dass Sicherheitsrisiken durch die bessere Übersicht eliminiert werden und die erforderliche Rechenzeit in der Sicherheitssteuerung 1 reduziert wird.

### Bezugszeichenliste

- 1: Sicherheitssteuerung
- 2: Steuereinheit
- 4: Schaltausgang
- 6,8: Relais
- 10, 12: Schaltausgang
- 14, 16, 18: Schalteingang
- 20: Not-Aus-Schalter
- 22: Schalter
- 24: Computer
- 26: Tastatur
- 28: Maus
- 30: Bildschirm
- 32,34: Funktionsbaustein
- 36: Multiplexer
- 38: Funktionsbaustein
- 40: Funktionsbaustein
- 42: Funktionsbaustein

- A: Ausgang
- E: Eingang
- P: Parameterauswahleingang

## Patentansprüche

1. Verfahren zum Programmieren einer Sicherheitssteuerung (1), ausgelegt zum gemäß einer Sicherheitsvorschrift sicheren Ein- und Ausschalten eines elektrischen Verbrauchers, wobei Schalteingänge und/oder Schaltausgänge der Sicherheitssteuerung (1) logisch verknüpft werden,
wobei die logische Verknüpfung einen Funktionsbaustein (38, 40) mit einer Anzahl von Ausgängen (A) umfasst, wobei durch den Funktionsbaustein (38, 40) ein Ausgangswert für den jeweiligen Ausgang (A) anhand zumindest eines Parameterwerts gebildet wird,
wobei in dem Funktionsbaustein (38, 40) eine Mehrzahl von Auswahlparameterwerten hinterlegt wird,
**dadurch gekennzeichnet, dass** der Funktionsbaustein (38, 40) einen Parameterauswahleingang (P) aufweist und der Parameterwert anhand des Eingangswerts am Parameterauswahleingang (P) aus den Auswahlparameterwerten ausgewählt wird.

2. Verfahren nach Anspruch 1, bei dem der Parameterwert Teil eines Parametersatzes ist, wobei in dem Funktionsbaustein eine Mehrzahl von Auswahlparametersätzen hinterlegt wird, der Funktionsbaustein (38, 40) einen Parameterauswahleingang (P) aufweist und der Parametersatz anhand des Eingangswerts am Parameterauswahleingang (P) aus den Auswahlparametersätzen ausgewählt wird.

3. Verfahren nach einem der vorhergehenden Ansprüche, bei dem der Parameterwert oder ggf. der Parametersatz anhand von mehr als zwei unterschiedlichen Eingangswerten am Parameterauswahleingang (P) ausgewählt wird.

4. Verfahren nach einem der vorhergehenden Ansprüche, bei dem der Funktionsbaustein (40) mehrere Parameterauswahleingänge (P) aufweist und der Parameterwert oder ggf. der Parametersatz anhand der Eingangswerte der mehreren Parameterauswahleingänge (P) aus den Auswahlparameterwerten ausgewählt wird.

5. Verfahren nach einem der vorhergehenden Ansprüche, bei dem der Parameterwert ein Zeitwert ist.

6. Verfahren nach einem der vorhergehenden Ansprüche, bei dem der Parameterwert ein Spannungswert ist.

7. Verfahren nach einem der vorhergehenden Ansprüche, bei dem das Programmieren mittels einer graphischen Benutzeroberfläche erfolgt, auf der den Schalteingängen und/oder Schaltausgängen eine graphische Repräsentation zugeordnet wird und die Schalteingänge und/oder Schaltausgänge durch Verbindung ihrer jeweiligen graphischen Repräsentation auf der graphischen Benutzeroberfläche logisch verknüpft werden.

8. Computerprogrammprodukt, welches direkt in den internen Speicher eines digitalen Computers (24) geladen werden kann und Softwarecodeabschnitte umfasst, die, wenn sie auf dem Computer (24) ausgeführt werden, den Computer (24) zum Ausführen des Verfahrens nach einem der vorhergehenden Ansprüche ertüchtigen.

9. Digitaler Computer (24), in dessen internen Speicher das Computerprogrammprodukt nach Anspruch 8 geladen ist.

10. Computerprogrammprodukt, welches direkt in den internen Speicher einer Sicherheitssteuerung (1) geladen werden kann und Softwarecodeabschnitte umfasst, die mittels des Verfahrens nach einem der Ansprüche 1 bis 7 erstellt wurden.

11. Sicherheitssteuerung (1), ausgelegt zum gemäß einer Sicherheitsvorschrift sicheren Ein- und Ausschalten eines elektrischen Verbrauchers, programmiert mit dem Verfahren nach einem der Ansprüche 1 bis 7.

## Claims

1. Method for programming a safety control device (1) that is designed to switch on and switch off an electrical load safely according to a safety regulation, switching inputs and/or switching outputs of the safety control device (1) being logically linked, the logical link comprising a functional module (38, 40) having a plurality of outputs (A), an output value for each output (A) being formed by the functional module (38, 40) on the basis of at least one parameter value, a plurality of selection parameter values being stored in the functional module (38, 40),
**characterised in that** the functional module (38, 40) comprises a parameter selection input (P) and the parameter value is selected from the selection parameter values on the basis of the input value at the parameter selection input (P).

2. Method according to claim 1, in which the parameter value is part of a parameter block, wherein a plurality of selection parameter blocks are stored in the functional module, the functional module (38, 40) comprises a parameter selection input (P), and the parameter block is selected from the selection parameter blocks on the basis of the input value at the parameter selection input (P).

3. Method according to any of the preceding claims, wherein the parameter value or optionally the parameter block is selected on the basis of more than two different input values at the parameter selection input (P).

4. Method according to any of the preceding claims, wherein the functional module (40) comprises a plurality of parameter selection inputs (P) and the parameter value or optionally the parameter block is selected from the selection parameter values on the basis of the input values of the plurality of parameter selection inputs (P).

5. Method according to any of the preceding claims, wherein the parameter value is a time value.

6. Method according to any of the preceding claims, wherein the parameter value is a voltage value.

7. Method according to any of the preceding claims, wherein the programming takes place using a graphical user interface on which a graphical representation is assigned to the switching inputs and/or switching outputs and the switching inputs and/or switching outputs are logically linked by connecting the respective graphical representation thereof on the graphical user interface.

8. Computer program product that can be loaded directly into the internal memory of a digital computer (24) and comprises portions of software code that, when they are executed on the computer (24), enable the computer (24) to carry out the method according to any of the preceding claims.

9. Digital computer (24), in the internal memory of which the computer program product according to claim 8 is loaded.

10. Computer program product which can be loaded directly into the internal memory of a safety control device (1) and comprises portions of software code that were generated by means of the method according to any of claims 1 to 7.

11. Safety control device (1) that is designed to switch on and switch off an electrical load safely according to a safety regulation and is programmed using the method according to any of claims 1 to 7.

## Revendications

1. Procédé de programmation d'un dispositif de commande de sécurité (1), conçu pour l'allumage et l'extinction sécurisés d'un consommateur électrique selon une mesure de sécurité, des entrées de commutation et/ou des sorties de commutation du dispositif de commande de sécurité (1) étant liées de manière logique,
la liaison logique comprenant un composant fonctionnel (38, 40) avec une pluralité de sorties (A), une valeur de sortie étant formée pour la sortie respective (A) par l'intermédiaire du composant fonctionnel (38, 40) à l'aide d'au moins une valeur de paramètre,
une pluralité de valeurs de paramètres de sélection étant déposée dans le composant fonctionnel (38, 40),
**caractérisé en ce que** le composant fonctionnel (38, 40) présente une entrée de sélection de paramètre (P) et la valeur de paramètre est sélectionnée parmi les valeurs de paramètres de sélection à l'aide de la valeur d'entrée au niveau de l'entrée de sélection de paramètres (P).

2. Procédé selon la revendication 1, dans lequel la valeur de paramètre fait partie d'un ensemble de paramètres, une pluralité d'ensembles de paramètres étant déposée dans le composant fonctionnel, le composant fonctionnel (38, 40) présentant une entrée de sélection de paramètre (P) et l'ensemble de paramètres étant sélectionné parmi les ensembles de paramètres de sélection à l'aide de la valeur d'entrée au niveau de l'entrée de sélection de paramètres (P).

3. Procédé selon l'une des revendications précédentes, dans lequel la valeur de paramètre ou le cas échéant l'ensemble de paramètres est sélectionné(e) à l'aide de plus de deux valeurs d'entrée différentes au niveau de l'entrée de sélection de paramètres (P).

4. Procédé selon l'une des revendications précédentes, dans lequel le composant fonctionnel (40) présente plusieurs entrées de sélection de paramètres (P) et la valeur de paramètre ou le cas échéant l'ensemble de paramètres est sélectionné(e) parmi les valeurs de paramètres de sélection à l'aide des valeurs d'entrée de la pluralité d'entrées de sélection de paramètres (P).

5. Procédé selon l'une des revendications précédentes, dans lequel la valeur de paramètre est une valeur temporelle.

6. Procédé selon l'une des revendications précédentes, dans lequel la valeur de paramètre est une valeur de tension.

7. Procédé selon l'une des revendications précédentes, dans lequel la programmation s'effectue au moyen d'une interface utilisateur graphique, sur laquelle aux entrées de commutation et/ou aux sorties de commutation est associée une représentation graphique et les entrées de commutation et/ou les sorties de commutation sont reliées de manière logique par une connexion de leur représentation graphique respective sur l'interface utilisateur graphique.

8. Produit de programme informatique, qui peut être chargé directement dans la mémoire interne d'un ordinateur (24) et comprend des sections de code logiciel qui, lorsqu'elles sont exécutées dans l'ordinateur (24), amènent l'ordinateur (24) à exécuter le procédé selon l'une des revendications précédentes.

9. Ordinateur numérique (24), dans la mémoire interne duquel le produit de programme informatique selon la revendication 8 est chargé.

10. Produit de programme informatique, qui peut être chargé directement dans la mémoire interne d'un dispositif de commande de sécurité (1) et comprend des sections de code logiciel qui ont été élaborées au moyen du procédé selon l'une des revendications 1 à 7.

11. Dispositif de commande de sécurité (1), conçue pour l'allumage et l'extinction sécurisés d'un consommateur électrique selon une consigne de sécurité, programmée avec le procédé selon l'une des revendications 1 à 7.
